# EUROPEAN PATENT APPLICATION

(11) **EP 2 653 364 A1**
(43) Date of publication of application: **23.10.2013**
(21) Application number: 11848936.8
(22) Date of filing: 02.11.2011
(51) Int. Cl.: B60W 20/00, B60K 6/48, B60K 6/547, B60L 11/14, B60W 10/02, B60W 10/06, B60W 10/08, B60W 10/10, F02D 29/02

(54) **POWER TRANSMISSION CONTROL DEVICE FOR VEHICLE**

(30) Priority: 17.12.2010 JP 2010281112
(71) Applicant: Aisin AI Co., Ltd., Nishio-shi, Aichi 445-0006 (JP); TOYOTA JIDOSHA KABUSHIKI KAISHA, Toyota-shi, Aichi-ken, 471-8571 (JP)
(72) Inventor: KOBAYASHI Kazutaka, Nishio-shi Aichi 445-0006 (JP); MIYAZAKI Takeshige, Nishio-shi Aichi 445-0006 (JP); TAKAHASHI Tomoya, Toyota-shi Aichi 471-8571 (JP)
(74) Representative: Ettmayr, Andreas
(86) International application number: PCT/JP2011/075256
(87) International publication number: WO 2012/081324

(57) **Abstract**

A manual transmission of the present apparatus has an EV travel gear position (the 1-st gear) for EV travel performed through use of only drive torque of a motor connected to the output shaft of the transmission, and EG travel gear positions (the 2-nd gear to the 5-th gear) for traveling through use of drive torque of an engine transmitted via a clutch. In the case where the EV travel gear position (the 1-st gear) is selected after a clutch pedal has been depressed, a MG torque is thereafter controlled on the basis of an accelerator opening and a clutch stroke, so that the vehicle starts (normal start control). Meanwhile, in the case where the EV travel gear position (the 1-st gear) is selected without the clutch pedal being depressed, the MG torque is maintained at zero, and a warning is provided to a driver. Thus, it becomes possible to provide a power transmission control apparatus for an HV-MT vehicle which allows EV travel and prompts the driver to operate the clutch pedal if the driver operates the shift lever without operating the clutch pedal.

## Description

### TECHNICAL FIELD

The present invention relates to a power transmission control apparatus for a vehicle, and more particularly to a power transmission control apparatus which is applied to a vehicle having an internal combustion engine and an electric motor as power sources and which includes a manual transmission and a friction clutch.

### BACKGROUND ART

Conventionally, there has been widely known a so-called hybrid vehicle which includes an engine and a dynamoelectric unit (an electric motor, an electric generator) as power sources (see, for example, Patent Document 1). In such a hybrid vehicle, there can be employed a structure in which the output shaft of the electric motor is connected to one of the output shaft of the internal combustion engine, the input shaft of a transmission, and the output shaft of the transmission. In the following description, drive torque from the output shaft of the internal combustion engine will be referred to as "engine drive torque," and drive torque from the output shaft of the electric motor as "motor drive torque."

In recent years, there has been developed a power transmission control apparatus which is applied to a hybrid vehicle and which includes a manual transmission and a friction clutch (hereinafter referred to as a "power transmission control apparatus for an HV-MT vehicle"). The term "manual transmission" used herein refers to a transmission which does not include a torque converter and whose gear position is selected in accordance with the shift position of a shift lever operated by a driver (the manual transmission is denoted by MT). Also, the term "friction clutch" used herein refers to a clutch which is interposed between the output shaft of the internal combustion engine and the input shaft of the manual transmission and which is configured such that the engagement state of a friction plate changes in accordance with the operation quantity of a clutch pedal operated by a driver.

### PRIOR ART DOCUMENT

### PATENT DOCUMENT

Patent Document 1: Japanese Patent Application Laid-Open (*kokai*) No. 2000-224710

### SUMMARY OF THE INVENTION

In general, in a power transmission control apparatus for an HV-MT vehicle which has been developed up to the present, there is employed a structure in which the output shaft of the electric motor is connected to the output shaft of the internal combustion engine. When the vehicle travels, the internal combustion engine operates at all times, and motor drive torque makes up for insufficiency of engine drive torque when necessary. Accordingly, there cannot be realized a state in which the vehicle travels through use of motor drive torque only while maintaining the internal combustion engine in a stop state (a state in which the output shaft of the internal combustion engine stops its rotation) (hereinafter referred to as "EV travel").

In order to enable the power transmission control apparatus for an HV-MT vehicle to realize such EV travel in a state in which the driver does not operate the clutch pedal (that is, the clutch is in an engaged state), it is necessary to rotate the output shaft of the transmission through use of motor drive torque, while maintaining a state in which the input shaft of the transmission does not rotate. For such operation, the output shaft of the electric motor must be connected to the output shaft of the transmission, and the transmission must be maintained in a "state in which no power transmission system (route) is established between the input shaft of the transmission and the output shaft thereof."

For such operation, the gear positions of the manual transmission must include not only a "gear position(s) for ordinary travel in which engine drive torque is utilized and in which a power transmission system is established between the input shaft of the transmission and the output shaft thereof' (hereinafter referred to as the "engine travel gear position") but also a "gear position for EV travel in which no power transmission system is established between the input shaft of the transmission and the output shaft thereof and a power transmission system is established between the output shaft of the electric motor and the output shaft of the transmission" (a gear position different from the neutral position; hereinafter referred to as a "motor travel gear position").

In the following description, such an HV-MT vehicle is assumed to include a power transmission control apparatus in which not only the "engine travel gear position" but also the "motor travel gear position" are employed. In the case of a vehicle in which the motor travel gear position is provided for starting the vehicle through EV travel, a driver may shift the shift lever from the neutral position to the motor travel gear position in a state in which the internal combustion engine is stopped.

In such a case, since as described above "no power transmission system is established between the input shaft of the transmission and the output shaft thereof' in the motor travel gear position, the gear position can be changed smoothly from the neutral position to the motor travel gear position even when the clutch pedal is not depressed (the clutch is maintained in an engaged state). Accordingly, the driver may possibly acquire the habit of operating the shift lever without depressing the clutch pedal when he or she starts the vehicle. Once the driver has acquired such a habit, even when the driver starts an ordinary vehicle which includes a manual transmission and a friction clutch and which includes only an internal combustion engine as a power source, the driver is likely to move the shift lever from the neutral position to the 1-st gear or the like without depressing the clutch pedal, which may result in occurrence of a situation where the driver cannot change the gear position smoothly.

In order to restrain the occurrence of such a situation, conceivably, it is preferred to prompt the driver to depress the clutch pedal if the driver operates the shift lever without depressing the clutch pedal.

An object of the present invention is to provide a power transmission control apparatus for an HV-MT vehicle which allows EV travel and which executes processing of prompting a driver to depress a clutch operation member if the driver operates a shift lever without operating the clutch operation member.

A power transmission control apparatus for a vehicle according to the present is applied to a hybrid vehicle which includes an internal combustion engine and an electric motor as power sources. This power transmission apparatus includes a manual transmission, a friction clutch, and control means.

The manual transmission is a transmission which does not include a torque converter and whose gear position is selected in accordance with the shift position of a shift operation member operated by a driver. The manual transmission includes an input shaft for receiving power from the output shaft of the internal combustion engine, and an output shaft for outputting power to drive wheels of the vehicle. The manual transmission has at least one "motor travel gear position" and at least one "engine travel gear position." When the shift operation member is moved to a shift position corresponding to the motor travel gear position, the motor travel gear position is selected and realized. When the shift operation member is moved to a shift position corresponding to the engine travel gear position, the engine travel gear position is selected and realized. Notably, in the "engine travel gear position," a power transmission system may be established "between the output shaft of the electric motor and the output shaft of the transmission," as well as "between the input shaft of the transmission and the output shaft of the transmission." Thus, when necessary, motor drive torque can make up for insufficiency of engine drive torque.

In this case, the "speed reduction ratio of the output shaft of the transmission to the output shaft of the electric motor" in the at least one motor travel gear position may be designed to be greater than the "speed reduction ratio of the output shaft of the transmission to the input shaft of the transmission" in the one engine travel gear position (in the case where only one engine travel gear position is provided) or greater than the maximum speed reduction ratio among those in a plurality of engine travel gear positions (in the case where a plurality of engine travel gear positions are provided). By virtue of this design, the motor travel gear position can serve as a low-speed-side gear position, and can be used as, for example, a gear position for "starting the vehicle through EV travel."

The friction clutch is a clutch which is interposed between the output shaft of the internal combustion engine and the input shaft of the manual transmission and whose engagement state changes in accordance with the operation quantity of a clutch operation member operated by a driver. The control means controls engine drive torque, which is drive torque output from the output shaft of the internal combustion engine, and motor drive torque, which is drive torque output from the output shaft of the electric motor.

This power transmission control apparatus includes first detection means for detecting operation of the clutch operation member; second detection means for detecting the quantity of driver's operation of an acceleration operation member for accelerating the vehicle; third detection means for detecting the selected gear position; and determination means for determining, on the basis of the operation of the clutch operation member, whether or not the clutch operation member has been operated.

The control means is configured such that, in the case where selection of the motor travel gear position is detected, the control means maintains the internal combustion engine in a stop state, and, in the case where selection of the engine travel gear position is detected, the control means operates the internal combustion engine and adjusts the engine drive torque on the basis of the operation quantity of the acceleration operation member. In the case where a power transmission system is established between the output shaft of the electric motor and the output shaft of the transmission in the "engine travel gear position," the motor drive torque may be adjusted on the basis of the operation quantity of the acceleration operation member and the operation quantity of the clutch operation member. By virtue of this control, when necessary, the motor drive torque can make up for insufficiency of the engine drive torque.

The feature of this power transmission control apparatus resides in that the control means is configured as follows. That is, in the case where selection of the motor travel gear position is detected in a state in which the clutch operation member is determined to have been operated, the motor drive torque is adjusted to an ordinary torque determined on the basis of the operation quantity of the acceleration operation member and the operation quantity of the clutch operation member. Meanwhile, in the case where selection of the motor travel gear position is detected in a state in which the clutch operation member is determined not to have been operated, the motor drive torque is adjusted to a torque (preferably, zero) which is smaller than the ordinary torque.

By virtue of the above-described configuration, in the case where the motor travel gear position is selected without the clutch operation member being operated, the motor drive torque whose magnitude corresponds to the operation quantity of the acceleration operation member cannot be obtained at the time of subsequent EV travel (e.g., when the vehicle is started through EV travel). In particular, in the case where the motor drive toque is adjusted to zero, the vehicle does not start. As a result, the driver is prompted to operate the clutch operation member. In other words, it is possible to prompt the driver to again move the shift lever from the neutral position to the motor travel gear position in a state in which he or she has operated the clutch operation member.

Preferably, the above-described power transmission control apparatus further comprises warning means for providing a warning to the driver when selection of the motor travel gear position is detected in a state in which the clutch operation member is determined not to have been operated. By virtue of this configuration, operation of the clutch operation member can be prompted more reliably.

The above description assumes the situation where the driver selects the motor travel gear position without operating the clutch operation member. However, there may occur a situation where the driver selects the engine travel gear position without operating the clutch operation member. In view of this, in the present power transmission control apparatus, the control means may be configured to maintain the internal combustion engine in the stop state when selection of the engine travel gear position is detected in a state in which the clutch operation member is determined not to have been operated.

By virtue of the above-described configuration, when such a situation occurs, the internal combustion engine is maintained in the stop state. Accordingly, an engine drive torque whose magnitude corresponds to the operation quantity of the acceleration operation member cannot be obtained after that. As a result, as in the above-described case, the driver is prompted to operate the clutch operation member. In other words, the driver is prompted to again move the shift lever from the neutral position to the engine travel gear position in a state in which he or she has operated the clutch operation member.

Notably, the expression "the internal combustion engine is maintained in the stop state" refers to a state in which the internal combustion engine is not started despite the condition for starting the internal combustion engine being satisfied as a result of operation of the shift lever to the engine travel gear position in a state in which the internal combustion engine is stopped, and a state in which the internal combustion engine is forcedly stopped in a state in which the internal combustion engine is operating.

### BRIEF DESCRIPTION OF THE DRAWINGS

[FIG. 1] Schematic diagram of a vehicle which includes a "power transmission control apparatus for an HV-MT vehicle which can perform EV travel" according to an embodiment of the present invention.
[FIG. 2] Flowchart showing the flow of processing performed by the apparatus shown in FIG. 1 so as to control MG torque.
[FIG. 3] Flowchart showing the flow of processing performed by the apparatus shown in FIG. 1 so as to control EG torque.
[FIG. 4] Schematic diagram of a vehicle which includes a "power transmission control apparatus for an HV-MT vehicle which can perform EV travel" according to a modification of the embodiment of the present invention.

### MODE FOR CARRYING OUT THE INVENTION

An embodiment of a power transmission control apparatus for a vehicle according to the present invention will now be described with reference to the drawings.

### (Configuration)

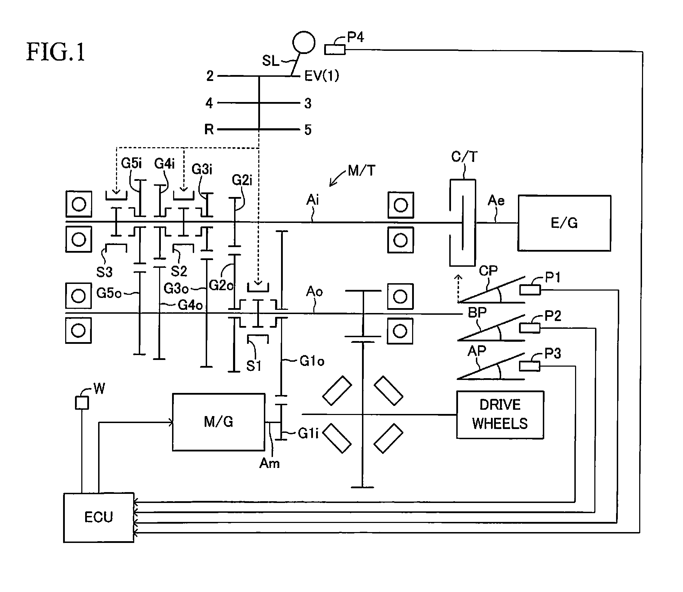

FIG. 1 schematically shows the configuration of a vehicle which includes a power transmission control apparatus according to the embodiment of the present invention (hereinafter referred to as the "present apparatus"). This vehicle is a hybrid vehicle which includes an internal combustion engine and a motor generator as power sources, and the present apparatus includes a manual transmission, which does not include a torque converter, and a friction clutch. That is, the present apparatus is the above-described "power transmission control apparatus for an HV-MT vehicle."

This vehicle includes an engine E/G, a manual transmission M/T, a friction clutch C/T, and a motor generator M/G. The engine E/G is a well known internal combustion engine, such as a gasoline engine which uses gasoline as fuel, or a diesel engine which uses light oil as fuel.

The manual transmission MIT is a transmission which does not include a torque converter and whose gear position is selected in accordance with the shift position of a shift lever SL operated by a driver. The manual transmission MIT has an input shaft Ai for receiving power from an output shaft Ae of the engine E/G, and an output shaft Ao for outputting power to drive wheels of the vehicle.

The friction clutch C/T is disposed between the output shaft Ae of the engine E/G and the input shaft Ai of the manual transmission M/T. The friction clutch C/T is a well known clutch configured such that the engagement state of a friction plate (more specifically, the axial position of a friction plate, which rotates together with the input shaft Ai, in relation to a fry-wheel, which rotates together with the output shaft Ae) changes in accordance with an operation quantity (depression amount) of a clutch pedal CP operated by the driver.

The engagement state of the friction clutch C/T (the axial position of the friction plate) may be mechanically adjusted in accordance with the operation quantity of the clutch pedal CP, by making use of a link mechanism or the like which mechanically connects the clutch pedal CP to the friction clutch C/T (the friction plate). Alternatively, the engagement state of the friction clutch C/T may be electrically adjusted by making use of drive force of an actuator which operates in accordance with the operation quantity of the clutch pedal CP detected by a sensor (a sensor P1 to be described later) (by a so-called by-wire scheme).

The motor generator M/G has a well known structure (e.g., an AC synchronous motor), and its rotor (not illustrated) rotates together with its output shaft Am. In the following description, drive torque from the output shaft Ae of the engine E/G will be referred to as "EG torque," and drive torque from the output shaft Am of the motor generator M/G as "MG torque."

As can be understood from the shift pattern of the shift lever SL shown in FIG. 1, in the present example, five forward gear positions (a 1-st gear to a 5-th gear) and a single reverse gear position (R) are provided as selectable gear position. In the following description, description regarding the reverse gear position (R) is not provided.

When the shift lever SL is shifted to a "1-st gear" position, a sleeve S1 moves from a neutral position shown in FIG. 1 to the right side (a 1-st gear position), whereby an idle gear G1o is fixed to an output shaft Ao such that the idle gear G1o cannot rotate in relation to the output shaft Ao. As a result, a power transmission system having a speed reduction ratio for the "1-st gear" is established between the output shaft Am of the motor generator M/G and the output shaft Ao of the manual transmission MIT via a gear G1i and the gear G1o. Meanwhile, no power transmission system is established between the input shaft Ai of the manual transmission M/T and the output shaft Ao of the manual transmission M/T. That is, when the "1-st gear" is selected, there is realized a state in which the vehicle travels by use of only MG torque, while maintaining the engine E/G in a stop state (a state in which the output shaft Ae of the engine E/G stops its rotation) (hereinafter referred to as "EV travel"). That is, this vehicle enables the driver to start the vehicle through EV travel by selecting the "1-st gear." In the following description, a gear position, such as the "1-st gear" in the present example, in which EV travel is realized will be referred to as the "EV travel gear position."

When the shift lever SL is shifted to a "2-nd gear" position, the sleeve S1 moves from the neutral position shown in FIG. 1 to the left side (a 2-nd gear position), whereby an idle gear G2o is fixed to the output shaft Ao such that the idle gear G2o cannot rotate in relation to the output shaft Ao. As a result, a power transmission system having a speed reduction ratio for the "2-nd gear" is established between the input shaft Ai of the manual transmission M/T (that is, the output shaft Ae of the engine E/G) and the output shaft Ao of the manual transmission M/T via a gear G2i and the gear G2o. Meanwhile, no power transmission system is established between the output shaft Am of the motor generator M/G and the output shaft Ao of the manual transmission M/T. That is, when the "2-nd gear" is selected, there is realized a state in which the vehicle travels by use of only EG torque transmitted via the clutch C/T (hereinafter referred to as "EG travel"). In the following description, a gear position, such as the "2-nd gear" in the present example, in which EG travel is realized will be referred to as the "EG travel gear position."

When the shift lever SL is shifted to a "3-rd gear (4-th gear)" position, a sleeve S2 moves from the neutral position shown in FIG. 1 to the right side (left side) (a 3-rd gear (4-th gear) position), whereby an idle gear G3i (G4i) is fixed to the input shaft Ai such that the idle gear G3i (G4i) cannot rotate in relation to the input shaft Ai. As a result, a power transmission system having a speed reduction ratio for the "3-rd gear (4-th gear)" is established between the input shaft Ai of the manual transmission M/T (that is, the output shaft Ae of the engine E/G) and the output shaft Ao of the manual transmission M/T via the gear G3i (G4i) and a gear G3o (G4o). Meanwhile, no power transmission system is established between the output shaft Am of the motor generator M/G and the output shaft Ao of the manual transmission M/T. That is, the "3-rd gear (4-th gear)" is also the "EG travel gear position."

When the shift lever SL is shifted to a "5-th gear" position, a sleeve S3 moves from the neutral position shown in FIG. 1 to the right side (a 5-th gear position), whereby an idle gear G5i is fixed to the input shaft Ai such that the idle gear G5i cannot rotate in relation to the input shaft Ai. As a result, a power transmission system having a speed reduction ratio for the "5-th gear" is established between the input shaft Ai of the manual transmission M/T (that is, the output shaft Ae of the engine E/G) and the output shaft Ao of the manual transmission M/T via the gear G5i and a gear G5o. Meanwhile, no power transmission system is established between the output shaft Am of the motor generator M/G and the output shaft Ao of the manual transmission M/T. That is, the "5-rd gear" is also the "EG travel gear position."

As described above, in the present example, only the "1-st gear" is the EV travel gear position, and each of the "2-nd gear" to the "5-th gear" is the EG travel gear position. The speed reduction ratios (the speed reduction ratio of the output shaft Ao to the input shaft Ai; that is, the ratio of the rotational speed of the input shaft Ai to that of the output shaft Ao) of the "2-nd gear" to the "5-th gear" are determined such that the speed reduction ratio of the "2-nd gear" is the largest, and that of the "5-th gear" is the smallest. The speed reduction ratio of the "1-st gear" (the speed reduction ratio of the output shaft Ao to the output shaft Am; that is, the ratio of the rotational speed of the output shaft Am to that of the output shaft Ao) is greater than the speed reduction ratio of the "2-nd gear." In the present example, when any one of the "2-nd gear" to the "5-th gear," which are EG travel gear positions, is selected, since no power transmission system is established between the output shaft Am and the output shaft Ao, it is impossible to make up for insufficiency of EG torque by use of MG torque.

The positions of the sleeves S1 to S3 may be mechanically adjusted in accordance with the shift position of the shift lever SL through use of a link mechanism or the like which mechanically connects the shift lever SL to the sleeves S1 to S3. Alternatively, the positions of the sleeves S1 to S3 may be electrically adjusted by making use of drive forces of actuators which operate in accordance with the shift position of the shift lever SL detected by a sensor (a sensor P4 to be described later) (by a so-called by-wire scheme).

The present apparatus includes the clutch operation quantity sensor P1 which detects the operation quantity (depression amount, clutch stroke, etc.) of the clutch pedal CP, a brake operation quantity sensor P2 which detects the operation quantity (depression force, presence/absence of operation, etc.) of a brake pedal BP, an accelerator operation quantity sensor P3 which detects the operation quantity (accelerator opening) of an accelerator pedal AP, and the shift position sensor P4 which detects the position of the shift lever SL.

Moreover, the present apparatus includes an electronic control unit (hereinafter simply referred to as the "ECU"). On the basis of information, among others, from the above-mentioned sensors P1 to P4 and other sensors, etc., the ECU controls the EG torque by controlling the fuel injection amount of the engine E/G (opening of its throttle valve) and controls the MG torque by controlling an inverter (not shown).

### (Control of the engine E/G)

The control of the engine E/G by the present apparatus is generally performed as follows. When the vehicle is stopped, the engine E/G is maintained in a stop state (a state in which fuel injection is not performed). In the case where the shift lever SL is shifted from the neutral position to one EG travel gear position (any of the "2-nd gear" to "the 5-th gear") (that is, one EG travel gear position is selected) when the engine E/G is in the stop state, the engine E/G is started (fuel injection is started). In periods during which the engine E/G is operating (fuel injection is being performed), the EG torque is controlled on the basis of the accelerator opening, etc. In the description below, this control will be referred to as "ordinary control of the engine E/G." Travel in the EG travel gear position is performed through the ordinary control of the engine E/G. When the shift lever SL is shifted from the neutral position to the EV travel gear position (the "1-st gear") (that is, the EV travel gear position is selected) in a period during which the engine E/G is operating or when the vehicle is stopped, the engine E/G is again maintained in the stop state.

### (Control of the motor generator M/G)

The control of the motor generator M/G by the present apparatus is generally performed as follows. When the vehicle is stopped, the motor generator M/G is maintained in a stop state (the MG torque = 0). In the case where the shift lever SL is shifted from the neutral position to the EV travel gear position (the "1-st gear") (that is, the EV travel gear position is selected) when the motor generator M/G is in the stop state, "normal start control" which utilizes the MG torque is started. In the normal start control, the MG torque is controlled on the basis of the accelerator opening and the clutch stroke. The MG torque in the normal start control is determined through use of a map or like which is prepared in advance and which defines the relation between "the accelerator opening and the clutch stroke" and "the torque of the internal combustion engine transmitted to the input shaft of the manual transmission via the clutch" at the time when an "ordinary vehicle which includes a manual transmission and a friction clutch and which includes only an internal combustion engine as a power source" starts in the "1-st gear."

When the shift lever SL is shifted from the neutral position to one EG travel gear position (any of the "2-nd gear" to "the 5-th gear") (that is, one EG travel gear position is selected) after the vehicle has been started in the EV travel gear position (the "1-st gear") or when the vehicle is stopped, the motor generator M/G is again maintained in the stop state.

### (Processing of prompting operation of the clutch pedal)

As described above, in the case where the EV travel gear position is provided for starting the vehicle through EV travel as in the case of the vehicle of the present embodiment, in general, a driver shifts the shift lever from the neutral position to the EV travel gear position (the "1-st gear") in a state in which the internal combustion engine E/G is stopped.

In such a case, since "no power transmission system is established between the input shaft Ai of the manual transmission MIT and the output shaft Ao thereof' in the EV travel gear position (the "1-st gear") as described above, the gear position can be changed smoothly from the neutral position to the EV travel gear position (the "1-st gear"), even when the clutch pedal CP is not depressed (the clutch C/T is maintained in an engaged state). Accordingly, the driver may possibly acquire the habit of operating the shift lever without depressing the clutch pedal CP when he or she starts the vehicle.

Once the driver has acquired such a habit, even when the driver starts an "ordinary vehicle which includes a manual transmission and a friction clutch and which includes only an internal combustion engine as a power source," the driver is likely to shift the shift lever from the neutral position to the 1-st gear or the like without depressing the clutch pedal, which may result in occurrence of a situation where the driver cannot change the gear position smoothly. In order to restrain the occurrence of such a situation, it is preferred to prompt the driver to depress the clutch pedal if the driver operates the shift lever without depressing the clutch pedal.

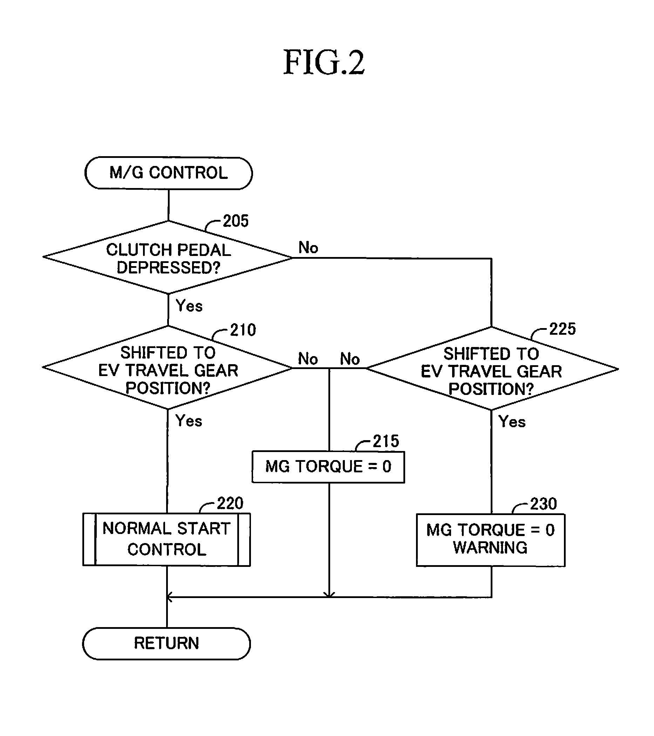

In view of this, in the present apparatus, in actuarially, the control of the motor generator M/G is performed in accordance with the flowchart shown in FIG. 2. The following processing assumes that the ignition switch (not shown) is in the ON state and the vehicle is in the stop state. First, in step 205, the ECU determines whether or not the clutch pedal CP has been depressed. This determination can be made, for example, by determining whether or not the depression amount (clutch stroke) of the clutch pedal CP is equal to or greater than a predetermined value.

In the case where the clutch pedal CP is determined to have been depressed ("Yes" in step 205), the ECU determines in step 210 whether or not the shift lever SL has been shifted from the neutral position to the EV travel gear position (the "1-st gear"). In the case where the ECU makes a "No" determination, the ECU maintains the MG torque at "0" in step 215. Meanwhile, in the case where the ECU makes a "Yes" determination in step 210; that is, the case where the EV travel gear position (the "1-st gear") has been selected in a state in which the clutch pedal CP is determined to have been depressed, in step 220, the ECU executes the "normal start control" in which the above-described MG torque is utilized.

Meanwhile, in the case where the clutch pedal CP is determined not to have been depressed ("No" in step 205), the ECU determines in step 225 whether or not the shift lever SL has been shifted from the neutral position to the EV travel gear position (the "1-st gear"). In the case where the ECU makes a "No" determination, the ECU maintains the MG torque at "0" in step 215. Meanwhile, in the case where the ECU makes a "Yes" determination in step 225; that is, the case where the EV travel gear position (the "1-st gear") has been selected in a state in which the clutch pedal CP is determined not to have been depressed, in step 230, the ECU maintains the MG torque at "0" instead of executing the "normal start control" in which the above-described MG torque is utilized. In addition, the ECU provides a warning to the driver of the vehicle through utilization of a warning device W (see FIG. 1). The warning device W may be a buzzer, a lamp, a display in an instrument panel, etc.

### (Action and effects)

As described above, in the present apparatus, in the case where the driver selects the EV travel gear position (the "1-st gear") without depressing the clutch pedal CP, the MG torque is maintained at "0" even when the accelerator pedal AP is depressed. Therefore, the vehicle cannot start. Furthermore, a warning is provided. Thus, the driver is prompted to operate the clutch pedal CP. In other words, it is possible to prompt the driver to again shift the shift lever from the neutral position to the EV travel gear position (the "1-st gear") in a state in which he or she has depressed the clutch pedal CP. As a result, the driver becomes unlikely to acquire the habit of operating the shift lever without depressing the clutch pedal CP when he or she starts the vehicle.

The present invention is not limited to the above-described embodiment, and various modifications may be employed without departing from the scope of the present invention. For example, in the above-described embodiment, when one of the "2-nd gear" to the "5-th gear," which are EG travel gear positions, is selected, it is impossible to make up for insufficiency of the EG torque by use of the MG torque, because no power transmission system is established between the output shaft Am of the motor generator M/G and the output shaft Ao of the manual transmission M/T. However, in the case where the power transmission control apparatus employs a structure which can establish a power transmission system between the output shafts Am and Ao in a state in which one of the "2-nd gear" to the "5-th gear," which are EG travel gear positions, is selected, it is possible to make up for insufficiency of the EG torque by use of the MG torque.

In the above-described embodiment, in the case where the driver selects the EV travel gear position (the "1-st gear") without depressing the clutch pedal CP, the MG torque is maintained at "0." However, the embodiment may be modified to adjust the MG toque to a torque (> 0) smaller than the torque determined in the above-described "normal start control." In this case as well, the MG torque whose magnitude corresponds to the accelerator opening cannot be obtained at the time when the vehicle is started through EV travel. Accordingly, it is possible to prompt the driver to operate the clutch pedal CP.

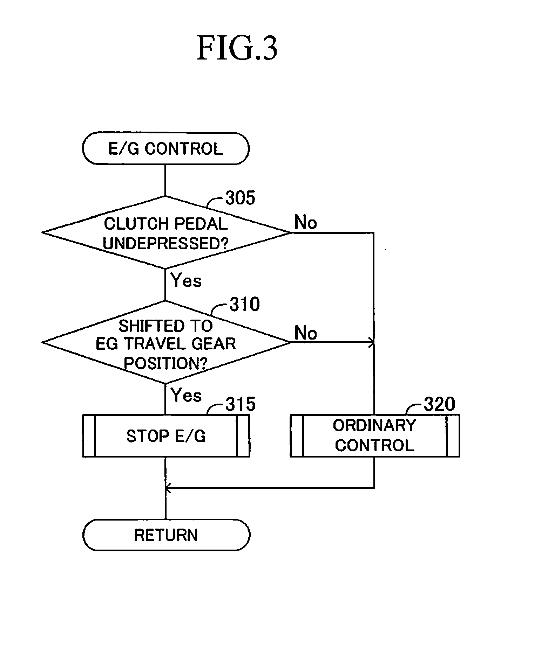

The above-described embodiment assumes the situation where the driver selects the EV travel gear position (the "1-st gear") without depressing the clutch pedal CP. However, there may occur a situation where the driver selects an EG travel gear position (any of the "2-nd gear" to the "5-th gear") without depressing the clutch pedal CP. In view of this, the ECU may perform the processing shown in FIG. 3. In the case where the shift lever SL is determined to have been shifted from the neutral position to an EG travel gear position (any of the "2-nd gear" to the "5-th gear") ("Yes" in step 310) in a state in which the clutch pedal CP is determined not to have been depressed ("Yes" in step 305), the ECU maintains the engine E/G in the stop state instead of executing the above-described "ordinary control of E/G" (step 315).

By virtue of the above-described processing, the EG torque whose magnitude corresponds to the accelerator opening cannot be obtained after that. As a result, as in the above-described case, the driver is prompted to operate the clutch pedal CP. In other words, the driver is prompted to again move the shift lever from the neutral position to the EG travel gear position (any of the "2-nd gear" to the "5-th gear") in a state in which he or she has depressed the clutch pedal CP.

Notably, the expression "maintains the engine E/G in the stop state" in step 315 refers to an operation of preventing the engine E/G from being started despite the fact that the condition for starting the engine E/G is satisfied when the shift lever is shifted to an E/G travel gear position in a state in which the E/G is stopped, for example, when the shift lever is shifted from the EV travel gear position (the "1-st gear") to an EG travel gear position (the "2-nd gear" or the like). That is, in the case where the driver shifts the shift lever from the "1-st gear" to the "2-nd gear" in a state in which he or she has depressed the clutch pedal CP, the engine E/G is started. Meanwhile, in the case where the driver shifts the shift lever from the "1-st gear" to the "2-nd gear" in a state in which he or she has not depressed the clutch pedal CP, the engine E/G is not started.

Alternatively, the expression "maintains the engine E/G in the stop state" in step 315 refers to an operation of forcedly stopping the engine E/G in a state in which the engine E/G is operating, for example, when the shift lever is shifted from one EG travel gear position (any of the "2-nd gear" to the "5-th gear") to another EG travel gear position (any of the "2-nd gear" to the "5-th gear"). That is, in the case where the driver shifts the shift lever from the "2-nd gear" to the "3-rd gear" in a state in which he or she has depressed the clutch pedal CP, the operation of the engine E/G is maintained. Meanwhile, in the case where the driver shifts the shift lever from the "2-nd gear" to the "3-rd gear" in a state in which he or she has not depressed the clutch pedal CP, the engine E/G is forcedly stopped.

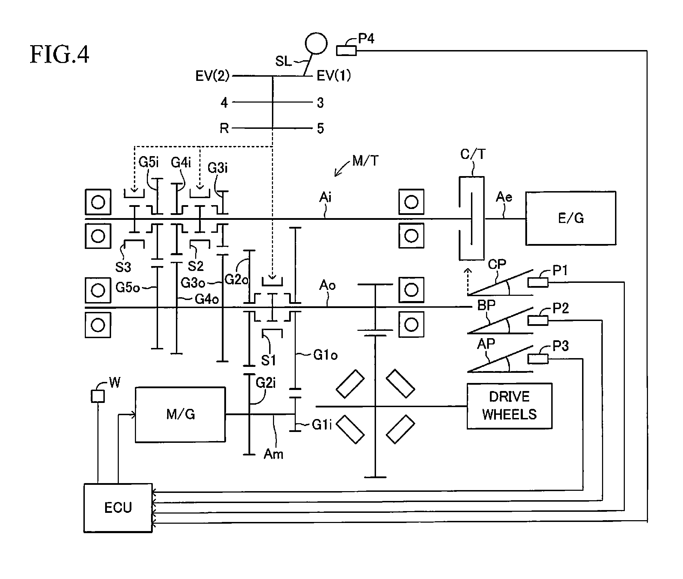

In the above-described embodiment, only the "1-st gear" is the EV travel gear position, and each of the "2-nd gear" to the "5-th gear" is the EG travel gear position. However, as shown in FIG. 4, each of the "1-st gear" and the "2-nd gear" may be the EV travel gear position, and each of the "3-rd gear" to the "5-th gear" may be the EG travel gear position. In the configuration shown in FIG. 4, when the shift lever SL is shifted to the "2-nd gear" position, the sleeve S1 moves from the neutral position shown in FIG. 4 to the left side (the 2-nd gear position), whereby the idle gear G2o is fixed to the output shaft Ao such that the idle gear G2o cannot rotate in relation to the output shaft Ao. As a result, a power transmission system having a speed reduction ratio for the "2-nd gear" is established between the output shaft Am of the motor generator M/G and the output shaft Ao of the manual transmission M/T via the gears G2i and G2o. Meanwhile, no power transmission system is established between the input shaft Ai of the manual transmission M/T and the output shaft Ao of the manual transmission M/T. That is, when the "2-nd gear" is selected, EV travel is realized as in the case where the "1-st gear" is selected.

## Claims

1. A power transmission control apparatus for a vehicle which includes an internal combustion engine and an electric motor as power sources, comprising:
a manual transmission which does not include a torque converter and whose gear position is selected in accordance with the shift position of a shift operation member operated by a driver, the manual transmission including an input shaft for receiving power from an output shaft of the internal combustion engine, and an output shaft for outputting power to drive wheels of the vehicle, and the manual transmission having at least one motor travel gear position, in which no power transmission system is established between the input shaft of the transmission and the output shaft of the transmission and a power transmission system is established between an output shaft of the electric motor and the output shaft of the transmission, and at least one engine travel gear position, in which a power transmission system is established between the input shaft of the transmission and the output shaft of the transmission, wherein the motor travel gear position is selected and realized as a result of the shift operation member being moved to a shift position corresponding to the motor travel gear position, and the engine travel gear position is selected and realized as a result of the shift operation member being moved to a shift position corresponding to the engine travel gear position;
a friction clutch which is interposed between the output shaft of the internal combustion engine and the input shaft of the manual transmission and whose engagement state changes in accordance with an operation quantity of a clutch operation member operated by a driver;
control means for controlling engine drive torque, which is drive torque output from the output shaft of the internal combustion engine, and motor drive torque, which is drive torque output from the output shaft of the electric motor;
first detection means for detecting operation of the clutch operation member;
second detection means for detecting the quantity of driver's operation of an acceleration operation member for accelerating the vehicle;
third detection means for detecting the selected gear position; and
determination means for determining on the basis of the operation of the clutch operation member whether or not the clutch operation member has been operated, wherein
the control means is configured such that, in the case where selection of the motor travel gear position is detected, the control means maintains the internal combustion engine in a stop state, and, in the case where selection of the engine travel gear position is detected, the control means operates the internal combustion engine and adjusts the engine drive torque on the basis of the operation quantity of the acceleration operation member; and
the control means is configured such that, in the case where selection of the motor travel gear position is detected in a state in which the clutch operation member is determined to have been operated, the control means adjusts the motor drive torque to an ordinary torque determined on the basis of the operation quantity of the acceleration operation member and the operation quantity of the clutch operation member, and, in the case where selection of the motor travel gear position is detected in a state in which the clutch operation member is determined not to have been operated, the control means adjusts the motor drive torque to a torque smaller than the ordinary torque.

2. A power transmission control apparatus for a vehicle according to claim 1, further comprising warning means for providing a warning to a driver when selection of the motor travel gear position is detected in a state in which the clutch operation member is determined not to have been operated.

3. A power transmission control apparatus for a vehicle according to claim 1 or 2, wherein the control means is configured to adjust the motor drive torque to zero when selection of the motor travel gear position is detected in a state in which the clutch operation member is determined not to have been operated.

4. A power transmission control apparatus for a vehicle according to any one of claims 1 to 3, wherein the control means is configured to maintain the internal combustion engine in a stop state when selection of the engine travel gear position is detected in a state in which the clutch operation member is determined not to have been operated.

5. A power transmission control apparatus for a vehicle according to any one of claims 1 to 4, wherein the speed reduction ratio of the output shaft of the transmission to the output shaft of the electric motor in the at least one motor travel gear position is greater than the speed reduction ratio of the output shaft of the transmission to the input shaft of the transmission in the at least one engine travel gear position, or greater than the maximum speed reduction ratio among those in a plurality of engine travel gear positions if provided.
